# EUROPÄISCHE PATENTANMELDUNG

(11) **EP 2 275 888 A2**
(43) Veröffentlichungstag der Anmeldung: **19.01.2011**
(21) Anmeldenummer: 10006910.3
(22) Anmeldetag: 05.07.2010
(51) Int. Cl.: G05B 19/33, G01P 3/44, G01P 3/489, G01P 21/02, G05D 3/12, H02P 6/16

(54) **Rotorlagegeber mit einer Kompensationseinheit zur Fehlerkompensation für einen drehzahlgeregelten Servomotor**

(30) Priorität: 04.07.2009 DE 102009031736
(71) Anmelder: Lenze Automation GmbH, 31855 Aerzen (DE)
(72) Erfinder: Krietemeier, Jürgen, 31855 Aerzen (DE)
(74) Vertreter: Schober, Mirko

(57) **Zusammenfassung**

Die vorliegende Erfindung betrifft einen Rotorlagegeber (1) für einen Motor (21) mit einem Resolver (2) zum Erfassen der Drehzahl- und/oder des Drehwinkels des Motors (21), wobei der Resolver (2) zum Erfassen eines Ausgabesignals (201, 202, 203) vorgesehen ist, und wobei das Ausgabesignal (201, 202, 203) eine Funktion der Drehzahl- und/oder des Drehwinkels des Motors (21) ist, wobei der Rotorlagegeber (1) eine Auswerteinheit (3) zur Auswertung des Ausgabesignals (201, 202, 203) umfasst. Weiterhin betrifft die vorliegende Erfindung einen Motor (21) mit dem erfindungsgemäßen Rotorlagegeber (1), einen Prüfplatz (20) für den Motor (21) sowie ein Verfahren zur Ermittlung eines Fehlersignals des Ausgabesignals (400) des Resolvers (2) mit dem Prüfplatz (20). Weiterhin betrifft die vorliegende Erfindung ein Verfahren zur Bestimmung der Drehzahl und/oder eines Drehwinkels des Motors (21), wobei eine Kompensation des Mess- und/oder Verarbeitungsfehlers erfolgt.

## Beschreibung

Die vorliegende Erfindung betrifft einen Rotorlagegeber nach dem Oberbegriff des Patentanspruchs 1, einen Motor mit dem Rotorlagegeber, einen Prüfplatz für den Motor sowie ein Verfahren zur Ermittlung eines Fehlersignals eines Ausgabesignals eines Resolvers.

Um die aktuelle Drehzahl und/oder den aktuellen Drehwinkel eines Motors bestimmen zu können, werden Drehzahl- und/oder Drehwinkelgeber verwendet, beispielsweise Resolver oder optische Sensoren. Im Vergleich zu optischen Sensoren haben Resolver den Vorteil, dass sie sehr robust sind und daher eine vergleichsweise lange Lebensdauer aufweisen. Jedoch sind Resolver im Vergleich zu optischen Sensoren ungenau.

In einer bekannten Ausführungsform umfasst ein Resolver einen Rotor, der mit einer erregenden Wechselspannung beaufschlagbar ist, sowie zwei um 90° zueinander versetzte Stator-Messwicklungen. Es sind aber auch Resolver mit höherer Polpaarzahl bekannt. Bei Rotation des Rotors wird die erregende Wechselspannung moduliert. Da in der Ausführungsform mit zwei Stator-Messwicklungen diese um 90° zueinander versetzt sind, liefern sie zwei sinusförmige, um 90° zueinander versetzte Messspannungen, deren Amplituden von der Stellung des Rotors abhängig sind und die im Wesentlichen mit derselben Frequenz und Phasenlage wie das erregende Wechselspannungssignal pulsieren. Durch die Auswertung der beiden Statorsignale ist eine eindeutige Berechnung der aktuellen Winkellage des Rotors möglich.

Die Größenordnung des Fehlers, mit dem herkömmliche Resolver den Drehwinkel erfassen, liegt typischerweise im Bereich +/-10 Winkelminuten.

Eine Drehzahl- und/oder Drehwinkelerfassung wird insbesondere für drehzahlgeregelte Motoren benötigt.

Stellantriebe für Fertigungsstraßen sind häufig räumlich sehr weit vom Motorregler, der üblicherweise in einem Schaltschrank untergebracht ist, entfernt. Daher wird das analoge Resolversignal in der Regel über weite Strecken aufwändig übertragen, um es für die Drehzahlregelung des Motors zu nutzen. Dies führt abhängig von der Länge des Signalweges zu nicht vernachlässigbaren Fehlern. Um die Fehler zu verringern, werden herkömmlich häufig paarweise geschirmte Leitungen verwendet, was sehr teuer ist.

Weiterhin ist auch die Auswertung des Resolversignals spürbar fehlerbehaftet und weist typische Winkelfehler in der Größenordnung +/-8 Winkelminuten auf. Typisch werden zudem nichtlineare Verstärkungsfehler der Auswertung bisher nur unzureichend oder sogar gar nicht eliminiert.

Solche systematischen Fehler wirken sich bei drehzahlgeregelten Motoren in einem signifikant schlechteren Rundlaufverhalten des Motors aus.

Ziel der vorliegenden Erfindung ist es daher, den Drehwinkel und/oder die Drehzahl eines Motors genauer zu erfassen, und somit eine verbesserte Drehzahlregelung eines Motors zu ermöglichen, so dass das Rundlaufverhalten eines drehzahlgeregelten Motors verbessert ist. Ein weiteres Ziel der Erfindung ist es, die Kosten für die Drehzahlregelung zu verringern und die Integration in komplexe Systeme, die insbesondere die beabstandete Aufstellung von Motor und Steuerung, welche beispielweise in der zentaralen Steuerung einer komplexen Produktionsanlage aufgestellt sein kann, erfordern, zu vereinfachen.

Die Aufgabe wird gelöst mit einem Rotorlagegeber für einen Motor mit einem Resolver zum Erfassen der Drehzahl- und/oder des Drehwinkels des Motors, wobei der Resolver zum Erfassen eines Ausgabesignals vorgesehen ist, wobei das Ausgabesignal eine Funktion der Drehzahl- und/oder des Drehwinkels des Motors ist, und wobei der Rotorlagegeber eine Auswerteinheit zur Auswertung des Ausgabesignals umfasst.

Da der Rotorlagegeber sowohl den Resolver als Drehzahl- und/oder Drehwinkelgeber als auch die Auswerteinheit zur Auswertung eines Ausgabesignals des Erfassungsmittels umfasst, ist der Signalweg zur Übertragung des Ausgabesignals minimal. Das Ausgabesignal eines Resolvers ist herkömmlich ein analoges Signal. Bei Auswertung des analogen Ausgabesignals, welche insbesondere die Digitalisierung des Signals beinhaltet, im Wesentlichen unmittelbar hinter dem Resolver entfällt die Notwendigkeit, das analoge Ausgabesignal mit aufwändigen Kabeln zu übertragen. Ein Messfehler, der durch eine Übertragung des Ausgabesignals über einen Signalweg entsteht, ist daher ebenfalls minimal oder entsteht erst gar nicht. Die Auswertung des Ausgabesignals erfolgt daher basierend auf einem im Wesentlichen unverfälschten Ausgabesignal.

In einer bevorzugten Ausführungsform umfasst die Auswerteinheit des Rotorlagegebers eine Kompensationseinheit zur Kompensation eines Mess- und/oder Verarbeitungsfehlers des Ausgabesignals des Resolvers. Vorteilhafterweise ermöglicht die Kompensationseinheit zum Einen die Kompensation eines Verarbeitungsfehlers, der bei der Verarbeitung des Ausgabesignals entsteht. Zum Zweiten ermöglicht die Kompensationseinheit die Kompensation des Messfehlers des Resolvers selbst. Mittels eines erfindungsgemäßen Rotorlagegebers ist daher die Erfassung der aktuellen Drehzahl und/oder des aktuellen Drehwinkels sehr genau möglich.

Bevorzugt umfasst die Auswerteinheit eine Kompensationseinheit zur Kompensation eines Mess- und/oder Verarbeitungsfehlers des durch die Auswerteeinheit ausgewerteten und dabei insbesondere digitalisierten Ausgabesignals des Resolvers, die geeignet ist, insbesondere auf der Basis zumindest einen, bevorzugt durch Fourier-Analyse eines Fehlersignals ermittelten, Kompensationsparameters, die tatsächliche Drehzahl nᵢₛₜ und/oder den tatsächlichen Drehwinkel Phiᵢₛₜ zu berechnen.

Dabei ist die Auswerteinheit neben der Auswertung des Ausgabesignals unter Berücksichtigung des Mess- und/oder Verarbeitungsfehlers und der Winkel- und Drehzahlberechnung auch für weitere Funktionen, beispielsweise für die Messung der Motortemperatur, vorgesehen. Bevorzugt umfasst der Rotorlagegeber eine Speichereinheit zum Speichern von Daten, insbesondere zum Speichern eines Fehlersignals und/oder zumindest eines, bevorzugt durch Fourier-Analyse eines Fehlersignals ermittelten, Kompensationsparameter. Die für die Kompensation des Mess- und/oder Verarbeitungsfehlers benötigten Daten können daher einmalig bestimmt und im Folgenden dauerhaft in der Speichereinheit des Rotorlagegebers gespeichert werden, so dass sie für den Betrieb des Motors ständig zur Verfügung stehen. Die Speichereinheit kann außerdem zum Speichern weiterer Daten vorgesehen sein, beispielsweise für Fertigungsinformationen, für ein elektronisches Typenschild, zur Ablage applikationsspezifischer Daten, zum Speichern von Informationen für multiturn Funktionen oder Maschinennullpunkt.

Bevorzugt umfasst der Rotorlagegeber eine digitale Schnittstelle zur Datenein- und/oder -ausgabe. Die Schnittstelle ermöglicht beispielsweise das Ein- und Auslesen des Fehlersignals in die bzw. aus der Speichereinheit, so dass der Rotorlagegeber nur die im Betrieb des Motors benötigten Funktionen zur Verfügung stellen muss.

Weiterhin ermöglicht sie die digitale Anbindung an eine Steuereinheit des Motors, insbesondere durch Ausgabe der tatsächlichen Drehzahl nᵢₛₜ und/oder den tatsächlichen Drehwinkel Phiᵢₛₜ, so dass keine analoge Übertragung der steuerungsrelevanten Daten, insbesondere der aktuellen Drehzahl und/oder des aktuellen Drehwinkels mehr notwendig ist. Datenfehler aufgrund eines langen analogen Signal-Übertragungsweges werden daher von vornherein vermieden. Außerdem ist eine digitale Schnittstelle sehr kostengünstig realisierbar, z.B. mit BISS-Interface(Bidirektional/Seriell/Synchron).

Außerdem ermöglicht die Schnittstelle die Übertragung weiterer Daten, beispielsweise solche den Motor und/oder den Rotorlagegeber charakterisierende Daten.

Der Rotorlagegeber kann auch weitere, insbesondere analoge und/oder Punkt-zu-Punkt-Schnittstellen umfassen, bevorzugt beispielsweise eine zusätzliche RS422-Schnittstelle, die zur Übertragung von impulsförmigen, drehwinkelabhängigen Signalen nutzbar ist.

Die Aufgabe wird weiterhin gelöst mit einem Motor, der den erfindungsgemäßen Rotorlagegeber umfasst. Die Drehzahl und/oder der Drehwinkel des Motors mit erfindungsgemäßem Rotorlagegeber ist während des Betriebs des Motors aufgrund der unmittelbar erfolgenden Auswertung und/oder Kompensation des Fehlersignals sehr genau erfassbar, so dass eine sehr genaue Steuerung des Motors möglich ist und das Rundlaufverhalten des Motors im Vergleich zu herkömmlichen Motoren mit Resolver deutlich verbessert ist.

Die Aufgabe wird weiterhin gelöst mit einem Prüfplatz für einen erfindungsgemäßen Motor mit einem Prüfmittel, an dem der Motor angeschlossen ist und mit dem der Motor betreibbar ist, und einem Referenz-Erfassungsmittel, das an den Motor angeschlossen ist, und mit dem ein Referenzsignal, welches von der Drehzahl und/oder dem Drehwinkel des Motors abhängig ist, erfassbar ist, wobei der Prüfplatz eine Verarbeitungseinheit umfasst, mit der der Mess- und/oder Verarbeitungsfehler des Resolvers des Rotorlagegebers des Motors bestimmbar ist.

Als Referenz-Erfassungsmittel ist ein Drehzahl- und/oder Drehwinkelgeber vorgesehen, der vorzugsweise im Vergleich zum Resolver des Rotorlagegebers erheblich genauer die Drehzahl und/oder den Drehwinkel erfasst. Bevorzugt ist das Referenz-Erfassungsmittel ein optischer Drehzahl- und/oder Drehwinkelgeber.

Der Prüfplatz ermöglicht den Vergleich des Referenzsignals mit dem Ausgabesignal des Resolvers. Anhand des Vergleichs ist daher der Mess- und/oder Verarbeitungsfehler des Resolvers bestimmbar.

Vorzugsweise ist die Verarbeitungseinheit zur Bestimmung eines Fehlersignals eines Ausgabesignals des Resolvers zum Referenzsignal vorgesehen. Daher ermöglicht der Prüfplatz die Ermittlung des Fehlersignals vor einem bestimmungsgemäßen Einbau des Motors, beispielsweise in eine Fertigungslinie. Die Ermittlung kann bevorzugt beim Abschluss der Herstellung des Motors einmalig erfolgen. Eine Parametrierung des Motors beim Einbau, insbesondere beim Kunden, ist daher unter Verwendung eines mit dem Prüfplatz parametrierten Motors nicht mehr erforderlich.

Vorzugsweise werden dabei durch Fourier-Analyse eines Fehlersignals ermittelte Kompensationsparameter (A₁ - Aₙ, Phi₁ - Phiₙ) ausgegeben und/-oder in einer Speichereinheit (10) des Rotorlagegeber (1) abgelegt.

Die Aufgabe wird weiterhin gelöst mit einem Verfahren zur Ermittlung eines Fehlersignals eines Ausgabesignals eines Resolvers mit einem erfindungsgemäßen Prüfplatz, wobei ein Motor an dem Prüfplatz betrieben wird, mittels eines Referenz-Erfassungsmittels ein Referenzsignal erfasst wird, das Ausgabesignal erfasst wird, und das Fehlersignal des Ausgabesignals von dem Referenzsignal bestimmt wird.

Das Fehlersignal gibt daher in Abhängigkeit von der Drehzahl und/oder dem Drehwinkel den Mess- und/oder Verarbeitungsfehler des Rotorlagegebers wieder.

Als Fehlersignal wird bevorzugt mindestens einer der folgenden Verläufe ermittelt:
- ein Verlauf einer Amplitude des Fehlersignals und/oder
- ein Verlauf eines Amplitudenverhältnisses, einer Phasenverschiebung und/oder einer Frequenzverschiebung zwischen dem Ausgabesignal und dem Referenzsignal.

Bevorzugt wird das Ausgabesignal für mehrere Drehzahlen und/oder Drehwinkel erfasst. Dadurch kann das Fehlersignal für die mehreren Drehzahlen und/oder Drehwinkel ermittelt werden, so dass eine sehr genaue Kompensation der Mess- und/oder Verarbeitungsfehler über die gemessenen Drehzahl- und/oder Drehwinkelbereiche möglich ist. Ebenfalls bevorzugt wird das Fehlersignal für verschiedene Betriebstemperaturen des Motors gemessen, um die Kompensation auch in Abhängigkeit der Betriebstemperatur des Motors sehr genau durchführen zu können. In einer bevorzugten Ausführungsform wird aus dem Fehlersignal zumindest ein Kompensationsparameter bestimmt, insbesondere mittels einer Fourier-Transformation des Fehlersignals, was zu einer Reduktion der Datenmenge führt. Besonders bevorzugt ist das Fehlersignal durch einen oder mehrere Kompensationsparameter für die Amplitude und Frequenz einer Grundschwingung des Fehlersignals sowie gegebenenfalls der Amplitude und/oder Phasenlage einer oder mehrerer Oberschwingungen des Fehlersignals bestimmt. Da der Mess- und/oder Verarbeitungsfehler drehzahl- und/oder drehwinkel- und/oder temperaturabhängig ist, erfordert die Kompenstation gegebenenfalls einc Vielzahl von Kompensationsparametern, und zwar in Abhängigkeit des Drehzahl- und/oder Drehwinkel- und/oder Betriebstemperaturbereiches, in dem der Motor betrieben wird. Durch die Reduktion der Datenmenge ist die benötigte Speicherkapazität dennoch gering. Außerdem ist eine digitale Verarbeitung des Fehlersignals sehr genau und sehr schnell möglich.

Bevorzugt werden das Fehlersignal und/oder der bzw. die Kompensationsparameter in einer Speichereinheit des Rotorlagegebers gespeichert. Die Kompensationsparameter können daher beispielsweise in einer Tabelle oder Matrix, wie in Form einer look up table, im Speicher des Rotorlagegebers gespeichert werden, so dass eine Verarbeitung dieser Daten im Rotorlagegeber besonders schnell möglich ist.

Die Aufgabe wird weiterhin gelöst mit einem Verfahren zur Bestimmung einer Drehzahl und/oder eines Drehwinkels eines Motors mit einem erfindungsgemäßen Rotorlagegeber, wobei der Motor betrieben wird, wobei ein Ausgabesignal des Resolvers des Rotorlagegebers des Motors erfasst wird, und wobei eine Kompensation eines Mess- und/oder Verarbeitungsfehlers durch Überlagerung eines Fehlersignals mit dem Ausgabesignal des Resolvers erfolgt.

Durch die Überlagerung des Fehlersignals wird der Mess- und/oder Verarbeitungsfehler des Rotorlagegebers bei der Berechnung der tatsächlichen Drehzahl und des tatsächlichen Drehwinkels kompensiert, so dass die tatsächliche Drehzahl und der tatsächliche Drehwinkel sehr genau erfassbar sind und der Motor anhand dieser sehr genau erfassten Werte sehr genau regelbar ist.

Bevorzugt ist das Fehlersignal durch einen oder mehrere Kompensationsparameter bestimmt, die beispielsweise durch Fourier-Analyse des Fehlersignals ermittelbar sind.

Der Mess- und/oder Verarbeitungsfehler umfasst bevorzugt Auswertfehler, Offset- und Amplitudenfehler in den Signalwegen, systematische Fehler des Resolvers, Verstärkungsfehler, Winkelfehler und/oder dergleichen.

Insbesondere ermöglicht die erfindungsgemäße Kombination Motor/Rotorlagegeber/Prüfplatz die Durchführung des im Folgenden beschriebenen Verfahrens zur Bestimmung einer Drehzahl und/oder eines Drehwinkels eines Motors.

Vor seinem bestimmungsgemäßen Einbau wird ein Motor, der einen erfindungsgemäßen Rotorlagegeber umfasst, zur Ermittlung des Fehlersignals des Ausgabesignals seines Resolvers an dem Prüfplatz betrieben. Dabei wird mittels eines Referenz-Erfassungsmittels, das vorzugsweise im Vergleich zum Resolver des Rotorlagegebers erheblich genauer die Drehzahl und/oder den Drehwinkel erfasst, ein Referenzsignal erfasst. Das Ausgabesignal des Resolvers wird ebenfalls erfasst und das Fehlersignal des Ausgabesignals von dem Referenzsignal bestimmt. Aus dem Fehlersignal wird zumindest ein Kompensationsparameter bestimmt, insbesondere mittels einer Fourier-Analyse des Fehlersignals. Das Fehlersignal wird, insbesondere in Form des, vorzugsweise durch Fourier-Analyse des Fehlersignals ermittelten, mindestens einen Kompensationsparameters ausgegeben und/oder in einer Speichereinheit des Rotorlagegebers abgelegt. Vorzugsweise wird dafür die digitale Schnittstelle des Rotorlagegebers genutzt.

Nach seinem bestimmungsgemäßen Einbau wird der Motor betrieben, wobei das Ausgabesignal des Resolvers des Rotorlagegebers des Motors erfasst wird, und durch die Auswerteeinheit ausgewertet, insbesondere digitalisiert wird. Dabei berechnet eine Kompensationseinheit zur Kompensation eines Mess- und/oder Verarbeitungsfehlers aus dem durch die Auswerteeinheit ausgewerteten, insbesondere digitalisierten Ausgabesignal des Resolvers unter Verwendung des, vorzugsweise in der Speichereinheit des Resolvers abgelegten, zumindest einen Kompensationsparameters die tatsächliche Drehzahl nᵢₛₜ und/oder den tatsächlichen Drehwinkel Phiᵢₛₜ.

Die tatsächliche Drehzahl nᵢₛₜ und/oder den tatsächlichen Drehwinkel Phiᵢₛₜ können dann über die digitale Schnittstelle des Rotorlagegebers als Digitalsignal an die Motorsteuerung ausgegeben werden. Dieses Digitalsignal ist bereits korrigiert, so dass seitens der Steuerung keine Anpassung an die Messfehler des Rotorlagegebers mehr erfolgen muss. Dies vereinfacht insbesondere die Zulieferung von Motoren beim Bau komplexer Anlagen, zudem ermöglicht es den einfachen und sicheren Austausch, da der Austauschmotor bereits mit seiner eigenen Kalibrierung geliefert wird, im besten Fall ist lediglich das Umstecken des Kabels zur Steuerung von der digitalen Schnittstelle des alten auf die des neuen Motors nötig.

Im Folgenden wird die Erfindung anhand von Figuren beschrieben. Die Figuren sind lediglich beispielhaft und schränken den Erfindungsgedanken nicht ein.
- **Fig. 1**: zeigt ein Blockschaltbild eines erfindungsge- mäßen Rotorlagegebers,
- **Fig. 2**: zeigt schematisch einen Prüfplatz für einen Motor mit einem erfindungsgemäßen Rotorlage- geber,
- **Fig. 3**: zeigt schematisch eine Ausführungsform eines erfindungsgemäßen Rotorlagegebers,
- **Fig. 4**: zeigt schematisch eine weitere Ausführungs- form eines erfindungsgemäßen Rotorlagegebers,
- **Fig. 5**: zeigt einen Ausschnitt einer Ausführungsform einer Winkelfehlerkorrektur in einer Kompen- sationseinheit eines erfindungsgemäßen Rotor- lagegebers.

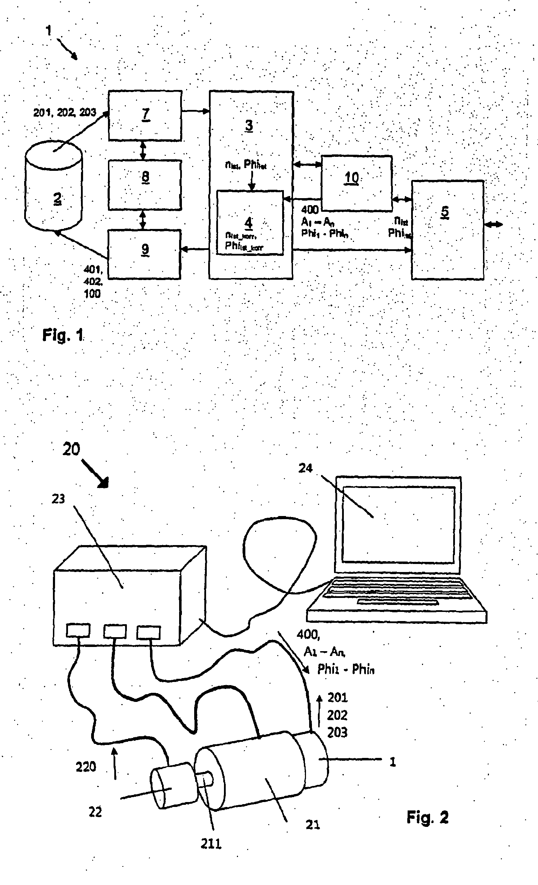

**Fig. 1** zeigt ein Blockschaltbild eines erfindungsgemäßen Rotorlagegebers 1. Der Rotorlagegeber 1 umfasst einen Resolver 2 sowie eine Auswerteinheit 3 zur Auswertung eines Ausgabesignals 201, 202, 203 des Resolvers 2. Das Ausgabesignal 201, 202, 203 ist proportional dem Drehwinkel und/oder der Drehzahl eines Motors 21 (s. **Fig. 2**), an den der Resolver 2 angeschlossen ist.

Die Auswerteinheit 3 ist beispielsweise als Signalprozessor, als ASIC (application specific integrated circuit) oder als Mikroprozessor gesteuerte Elektronik realisiert.

Sie umfasst eine Kompensationseinheit 4 für die Kompensation eines Mess- und/oder Verarbeitungsfehlers des Ausgabesignals 201, 202, 203 des Resolvers 2. Mess- und/oder Verarbeitungsfehler sind dabei die bei der Messung und Verarbeitung des Ausgabesignals 201, 202, 203 des Resolvers 2 auftretenden Fehler, beispielsweise Auswertfehler, Offset- und Amplitudenfehler in den Signalwegen, systematische Fehler des Resolvers 2, Verstärkungsfehler, Winkelfehler und/oder dergleichen.

In der Kompensationseinheit 4 erfolgt die Fehlerkorrektur auf Basis zumindest eines Fehlersignals 400 bzw. zumindest eines Kompensationsparameters A₁ - Aₙ, Phi₁ - Phiₙ, der insbesondere durch Fourier-Analyse des Fehlersignals ermittelt ist. Das Fehlersignal 400 und/oder der zumindest eine Kompensationsparameter A₁ - Aₙ, Phi₁ - Phiₙ ist in einer Speichereinheit 10 des Rotorlagegebers 1 gespeichert. Die Speichereinheit 10 kann neben der Nutzung für die Speicherung des Fehlersignals 400 und/oder des Kompensationsparameters A₁ - Aₙ, Phi₁ - Phiₙ für die Fehlerkorrektur auch für die Speicherung weiterer Daten genutzt werden, beispielsweise für rotorlagegeberspezifische oder motorspezifische Daten.

In der Kompensationseinheit wird mit Hilfe des Fehlersignals 400 bzw. der Kompensationsparameter A₁ - Aₙ, Phi₁ - Phiₙ die tatsächliche Drehzahl nᵢₛₜ und/oder der tatsächliche Drehwinkel Phiᵢₛₜ zur korrigierten Drehzahl n_{ist_korr} und/oder zum korrigierten Drehwinkel Phi_{ist_korr} korrigiert, beispielsweise mittels inverser Fourier-Transformation.

Grundsätzlich ist aber auch eine Übertragung eines Fehlersignals und/oder eines Kompensationsparameters über eine digitale Schnittstelle 5 des Rotorlagegebers 1 möglich. Die digitale Schnittstelle 5 ist aber vornehmlich für die Datenübertragung von und zu einem Antriebsregler (hier nicht gezeigt) des Motors 21 vorgesehen. Es handelt sich um eine definierte Antriebsschnittstelle, über die antriebsrelevante Daten, insbesondere die tatsächlichen Werte für die Drehzahl nᵢₛₜ und/oder den Drehwinkel Phiᵢₛₜ, übertragen werden. Da als Schnittstelle zum Antriebsregler des Motors 21 nun die digitale Schnittstelle 5 genutzt wird, müssen keine analogen Signale mehr aufwändig vom Resolver 2 aus über lange Signalwege zum Antriebsregler übertragen werden. Daher ist die Übertragung der antriebsrelevanten Daten genauer und mit weniger aufwändigen Signalleitungen und daher auch kostengünstiger möglich.

Für die Verarbeitung von Ein- und Ausgabesignalen 100, 201, 202, 203, 400, 401, 402, nᵢₛₜ, Phiᵢₛₜ, A₁ - Aₙ, Phi₁ - Phiₙ des Rotorlagegebers 1 umfasst dieser weiterhin Differenzverstärker 7, Verstärker 9 und Treiber 9, sowie weitere elektrische Bauteile, die fehlerbehaftet sind. Jedoch werden bereits für die Generierung eines Fehlersignals 400 bzw. des oder der Kompensationsparameter A₁ - Aₙ, Phi₁ - Phiₙ alle im Rotorlagegeber 1 entstehenden Fehler berücksichtigt, da der Rotorlagegeber 1 selbst für die Generierung dieser Signale und/oder Parameter genutzt wird. Daher werden solche Mess- und/oder Verarbeitungsfehler, die im Rotorlagegeber 1 selbst entstehen, mit dem erfindungsgemäßen Rotorlagegeber 1 im Rahmen der Kompensation unmittelbar kompensiert.

Weiterhin weist der erfindungsgemäße Rotorlagegeber 1 ein Überwachungsmittel 8 für den Resolver 2, insbesondere einen Sensor zum Erkennen eines Drahtbruchs, auf.

**Fig. 2** zeigt schematisch einen Prüfplatz 20 für einen Motor 21 mit einem erfindungsgemäßen Rotorlagegeber 1. Der Prüfplatz 20 umfasst ein Prüfmittel 23, an das der Motor 21 mit Rotorlagegeber 1 anschließbar und betreibbar ist. Weiterhin umfasst der Prüfplatz 20 ein Referenz-Erfassungsmittel 22, mit dem die Drehzahl und/oder der Drehwinkel des Motors 21 erfassbar sind. Das Referenz-Erfassungsmittel 22 ist beispielsweise ebenfalls als Resolver, bevorzugt jedoch als Potentiometergeber, Inkrementalgeber oder Absolutwertmesser ausgeführt, und liefert ein Referenzsignal 220, welches die tatsächliche Drehzahl nᵢₛₜ und/oder den tatsächlichen Drehwinkel Phiᵢₛₜ als Referenzdrehzahl und/oder Referenzwinkel beinhaltet. Das Referenz-Erfassungsmittel 22 ist an den Motor 21 angeschlossen, indem es beispielsweise drehfest an einer Drehachse 211 des Motors 21 angeordnet wird.

Wird der Motor 21 am Prüfmittel 23 betrieben, liefert der Rotorlagegeber 1 sein Ausgabesignal 201, 202, 203 an das Prüfmittel 23. Das Prüfmittel 23 überträgt sowohl das Referenzsignal 220 als auch das Ausgabesignal 201, 202, 203 an eine Verarbeitungseinheit 24, die eine prozessorgesteuerte Einheit ist, insbesondere ein PC. Die Verarbeitungseinheit 24 ermittelt aus der Abweichung des Ausgabesignals 201, 202, 203 vom Referenzsignal 220 das Fehlersignal 400 und/oder die Kompensationsparameter A₁ - Aₙ, Phi₁ - Phiₙ, die sie an das Prüfmittel 23 überträgt und die vom Prüfmittel 23 aus zum Rotorlagegeber 1 übertragen und dort bevorzugt in der Speichereinheit 10 des Rotorlagegebers 1 gespeichert werden, so dass sie dauerhaft für den Betrieb des Motors 21 zur Verfügung stehen, ohne dass der Motor 21 am Prüfplatz 20 dauerhaft angeschlossen sein müsste.

Die Kompensationsparameter A₁ - Aₙ, Phi₁ - Phiₙ werden bevorzugt mittels einer Fourier-Transformation ermittelt, da dieses Verfahren sehr genau und schnell ist.

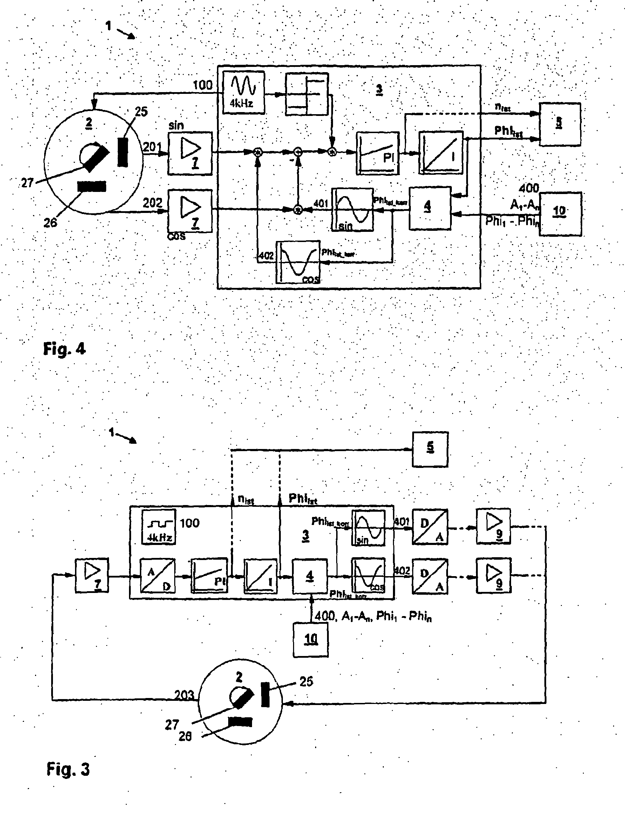

Die **Fig. 3** und **Fig. 4** zeigen schematisch zwei Ausführungsformen eines erfindungsgemäßen Rotorlagegebers 1. Der Rotorlagegeber 1 weist jeweils den Resolver 2 sowie die Auswerteinheit 3 mit der Kompensationseinheit 4 auf. Die Auswerteinheit 3 ist für die Ermittlung der Drehzahl nᵢₛₜ und/oder des Drehwinkels Phiᵢₛₜ des Motors 21 (s. **Fig. 2**), an den der Rotorlagegeber 1 angeschlossen ist, vorgesehen, wobei die tatsächliche Drehzahl nᵢₛₜ und/oder der tatsächliche Drehwinkel Phiᵢₛₜ aus einem Ausgabesignal 201, 202, 203 des Resolvers 2 bestimmt wird. Die tatsächliche Drehzahl nᵢₛₜ und der tatsächliche Drehwinkel Phiᵢₛₜ des Motors werden über eine digitale Schnittstelle 5 zur Antriebssteuerung (hier nicht gezeigt) des Motors 21 übertragen.

Beide Ausführungsformen sehen die Kompensationseinheit 4 für eine Winkelfehlerkorrektur vor. Die Kompensation erfolgt auf Basis des tatsächlichen Drehwinkels Phiᵢₛₜ mit Hilfe des Fehlersignals 400 bzw. mindestens eines Kompensationsparameters A₁ - Aₙ, Phi₁ - Phiₙ, wobei das Fehlersignal 400 und/oder der Kompensationsparameter an dem Prüfplatz 20 (s. **Fig. 2**) für den Motor 21 ermittelt wurde und hier in der Speichereinheit 10 des Rotorlagegebers 1 gespeichert vorliegt.

Die in **Fig. 3** dargestellte Ausführungsform des Rotorlagegebers 1 arbeitet nach dem sogenannten Rückwärtsverfahren. Bei diesem Verfahren wird ein mit einem niederfrequenten Erregersignal 100 moduliertes Sinus-Signal 401 in eine erste Resolver-Statorwicklung 25 und ein mit dem niederfrequenten Erregersignal 100 beaufschlagtes Cosinus-Signal 402 in eine zweite Resolver-Statorwicklung 26 des Resolvers 2 eingespeist. Als niederfrequentes Erregersignal 100 wird vorzugsweise ein 4kHz Signal verwendet.

Das Sinus-Signal 401 sowie das Cosinus-Signal 402 sind mit dem in der Kompensationseinheit 4 korrigierten tatsächlichen Drehwinkel Phi_{ist_korr} gewichtet.

Die Resolver-Statorwicklungen 25, 26 sind so angeordnet, dass das sich bildende Magnetfeld den Resolver-Rotor 27 durchfließt. Im Resolver-Rotor 27 werden daher das Sinus-Signal 401 sowie das Cosinus-Signal 402 geometrisch addiert, wobei aufgrund der Drehung des Resolver-Rotors 27 in diesem bzw. in einer Wicklung des Resolver-Rotors 27 eine elektrische Wechselspannung induziert wird, die von der Stellung des Resolver-Rotors 27 abhängig und daher ein Maß für die tatsächliche Winkellage sowie die tatsächliche Winkelgeschwindigkeit des Resolver-Rotors 27 ist. Dem Ausgabesignal 203 des Resolvers 2 ist daher ein Signal, welches eine der Winkelgeschwindigkeit des Motors 21 entsprechende Frequenz aufweist und gegenüber dem Sinus- und dem Cosinus-Signal 401, 402 phasenverschoben ist, entnehmbar, das dem mechanischen Winkel des Resolver-Rotors 27 folgt. Daher ist dem Ausgabesignal 203 die Abweichung der Winkellage bzw. der Winkelgeschwindigkeit von den korrigierten Werten entnehmbar. Das Ausgabesignal 203 des Resolvers 2 entspricht der Winkeldifferenz zwischen dem mechanischen Winkel des Resolver-Rotors 27 und dem tatsächlichen Drehwinkel Phiᵢₛₜ.

Dieses Ausgabesignal 203 wird mittels eines Wandlers A/D demoduliert und in den Nachlaufregler PI eingespeist.

Der Nachlaufregler PI hat sowohl in der Ausführungsform der **Fig. 3** als auch in der Ausführungsform der **Fig. 4** die Aufgabe, die Differenz zwischen der tatsächlichen Drehzahl nᵢₛₜ und/oder dem tatsächlichen Drehwinkel Phiᵢₛₜ zur gemessenen Drehzahl und/oder zum gemessenen Drehwinkel zu minimieren, wobei - wie oben angeführt - die gemessene Drehzahl und/oder der gemessene Drehwinkel dem Ausgabesignal 203 entnehmbar ist. Die Führungsgröße des Nachlaufreglers PI ist daher in beiden Ausführungsformen der Wert "0".

Am Ausgang des Nachlaufreglers PI liegt die tatsächliche Drehzahl nᵢₛₜ des Motors 21 vor. Mittels eines Integrators I lässt sich aus der tatsächlichen Drehzahl nᵢₛₜ des Motors 21 die tatsächliche Winkellage Phiᵢₛₜ des Motors 21 ermitteln.

Sowohl die tatsächliche Drehzahl nᵢₛₜ als auch der tatsächliche Drehwinkel Phiᵢₛₜ können dem Regelkreis daher vor der Kompensationseinheit 4 entnommen werden.

Im Gegensatz zur Ausführungsform der **Fig. 3** arbeitet die Ausführungsform der **Fig. 4** nach dem sogenannten Vorwärtsverfahren. Bei diesem Verfahren werden nicht die Resolver-Statorwicklungen 25, 26 sondern wird der Resolver-Rotor 27 mit einem Erregersignal 100 erregt. Das Erregersignal 100 ist hier ein sinusförmiges niederfrequentes 4kHz Signal.

Auch hier wird aus dem tatsächlichen Drehwinkel Phiᵢₛₜ in der Kompensationseinheit 4 mit Hilfe des Fehlersignals 400 bzw. dem mindestens einen Kompensationsparameter A₁ - Aₙ, Phi₁ - Phiₙ der korrigierte Drehwinkel Phi_{ist_korr} sowie das Sinus-Signal 401 und das Cosinus-Signal 402 gebildet. Die Ausgabesignale 201, 202 der Resolver-Statorwicklungen 25, 26 werden dann mit dem Sinus-Signal bzw. dem Cosinus-Signal korreliert und diese Signale zu einem Differenzsignal subtrahiert, welches die Abweichung des korrigierten Drehwinkels Phi_{ist_korr} zum gemessenen Drehwinkel des Resolver-Rotors beinhaltet. Dieses demodulierte Differenzsignal ist das Eingangssignal des Nachlaufreglers PI, dem analog der **Fig. 3** die tatsächliche Drehzahl nᵢₛₜ und durch Integration der tatsächliche Drehwinkel Phiᵢₛₜ entnehmbar ist.

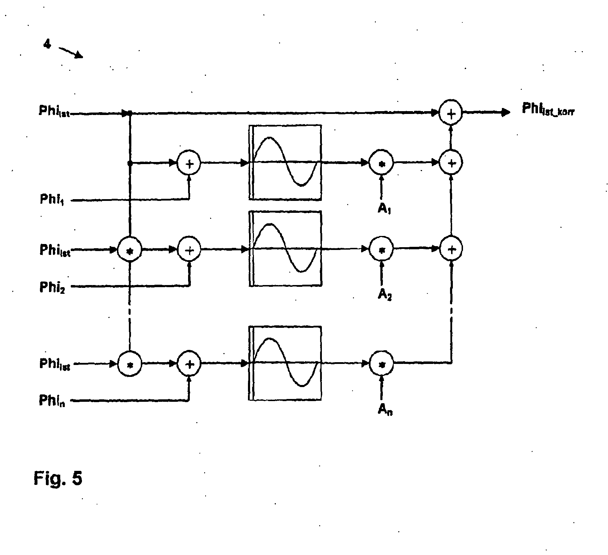

**Fig. 5** zeigt einen Ausschnitt einer Ausführungsform einer Winkelfehlerkorrektur in einer Kompensationseinheit 4 eines erfindungsgemäßen Rotorlagegebers 1.

Im vorliegenden Fall liegt das Fehlersignal 400 in Form von Kompensationsparametern A₁ - Aₙ, Phi₁ - Phiₙ, vor, die durch Fourier-Transformation insbesondere an einem Prüfplatz 20 für einen Motor 21 mit einem erfindungsgemäßen Rotorlagegeber 1 ermittelt wurden. Die Kompensation erfolgt in der Kompensationseinheit 4 durch Überlagerung der Grundschwingung für den tatsächlich ermittelten Drehwinkel Phiᵢₛₜ mit harmonischen Oberschwingungen, die durch ihre Amplitude A₁ - Aₙ und ihre Phasenverschiebung Phi₁ - Phiₙ, zur Grundschwingung bestimmt sind. Es handelt sich daher um eine inverse Fourier-Transformation.

### Bezugszeichenliste

- 1: Rotorlagegeber
- 2: Resolver zur Erfassung der Drehzahl- u/o des Drehwinkels eines Motors
- 3: Auswerteinheit
- 4: Kompensationseinheit
- 5: Digitale Schnittstelle
- 7: Differenzverstärker
- 8: Überwachungseinheit
- 9: Treiber / Verstärker
- 10: Speichereinheit
- 20: Prüfplatz
- 21: Motor
- 211: Drehachse des Motors
- 22: Referenz- Erfassungsmittel, Drehzahl- und/oder Drehwinkelgeber
- 23: Prüfmittel
- 24: Verarbeitungseinheit, PC
- 25: Erste Resolver-Statorwicklung
- 26: Zweite Resolver-Statorwicklung
- 27: Resolver-Rotor
- 201: Ausgabesignal einer ersten Resolver-Statorwicklung
- 202: Ausgabesignal einer zweiten Resolver-Statorwicklung
- 203: Ausgabesignal eines Resolver-Rotors
- 220: Referenzsignal, Referenzdrehzahl und/oder Referenzwinkel
- 400: Koeffizienten, Parameter
- 401: Sinus-Signal
- 402: Cosinus-Signal
- A₁ - Aₙ: Kompensationsparameter für eine Amplitude eines ersten Resolver-Statorsignals
- Phi₁ -: Kompensationsparameter für eine Phasenverschiebung
- Phiₙ: eines zweiten Resolver- Statorsignals

## Patentansprüche

1. Rotorlagegeber (1) für einen Motor (21) mit einem Resolver (2) zum Erfassen der Drehzahl- und/oder des Drehwinkels des Motors (21), wobei der Resolver (2) zum Erfassen eines Ausgabesignals (201, 202, 203) vorgesehen ist, und wobei das Ausgabesignal (201, 202, 203) eine Funktion der Drehzahl- und/ oder des Drehwinkels des Motors (21) ist,
**dadurch gekennzeichnet,**
**dass** der Rotorlagegeber (1) eine Auswerteinheit (3) zur Auswertung des Ausgabesignals (201, 202, 203) umfasst.

2. Rotorlagegeber nach Anspruch 1,
**dadurch gekennzeichnet,**
**dass** die Auswerteinheit (3) eine Kompensationseinheit (4) zur Kompensation eines Mess- und/oder Verarbeitungsfehlers des durch die Auswerteinheit (3) digitalisierten Ausgabesignals (201, 202, 203) des Resolvers (2) umfasst, die geeignet ist, insbesondere auf der Basis des zumindest einen, bevorzugt durch Fourier-Analyse eines Fehlersignals ermittelten, Kompensationsparameters (A₁ - Aₙ, Phi₁ - Phiₙ), die tatsächliche Drehzahl nᵢₛₜ und/oder den tatsächlichen Drehwinkel Phiᵢₛₜ zu berechnen.

3. Rotorlagegeber nach einem der vorherigen Ansprüche,
**dadurch gekennzeichnet,**
**dass** er eine Speichereinheit (10) zum Speichern von Daten, insbesondere eines Fehlersignals (400) und/oder zumindest einen, bevorzugt durch Fourier-Analyse eines Fehlersignals ermittelten, Kompensationsparameters (A₁ - Aₙ, Phi₁ - Phiₙ), umfasst.

4. Rotorlagegeber nach einem der vorherigen Ansprüche,
**dadurch gekennzeichnet,**
**dass** er eine digitale Schnittstelle (5) zur Datenein- und/oder -ausgabe, insbesondere die tatsächliche Drehzahl nᵢₛₜ und/oder den tatsächlichen Drehwinkel Phiᵢₛₜ umfasst.

5. Verfahren zur Bestimmung einer Drehzahl und/oder eines Drehwinkels eines Motors (21) mit einem Rotorlagegeber, vorzugsweise mit einem Rotorlagegeber nach einem der Ansprüche 1 - 4, wobei
• vor seinem bestimmungsgemäßen Einbau ein Motor (21) zur Ermittlung eines Fehlersignals (400) eines Ausgabesignals (201, 202, 203) eines Resolvers (2) an dem Prüfplatz (20) betrieben wird, wobei
• mittels eines Referenz-Erfassungsmittels (22), das vorzugsweise im Vergleich zum Resolver (2) des Rotorlagegebers erheblich genauer die Drehzahl und/oder den Drehwinkel erfasst, ein Referenzsignal (220) erfasst wird,
• das Ausgabesignal (201, 202, 203) erfasst wird und
• das Fehlersignal (400) des Ausgabesignals (201, 202, 203) von dem Referenzsignal (220) bestimmt wird,
• aus dem Fehlersignal (400) zumindest ein Kompensationsparameter (A₁ - Aₙ, Phi₁ - Phiₙ) bestimmt wird, insbesondere mittels einer Fourier-Analyse des Fehlersignals (400)
• das Fehlersignal, insbesondere in Form des, vorzugsweise durch Fourier-Analyse eines Fehlersignals ermittelten, mindestens einen Kompensationsparameters (A₁ - Aₙ, Phi₁ - Phiₙ), ausgegeben und/oder in einer Speichereinheit (10) des Rotorlagegebers abgelegt wird,
• und nach seinem bestimmungsgemäßen Einbau der Motor (21) betrieben wird,
• wobei das Ausgabesignal (201, 202, 203) des Resolvers (2) des Rotorlagegebers (1) des Motors (21) erfasst wird, und
• durch die Auswerteinheit (3) ausgewertet, insbesondere digitalisiert wird,
• wobei eine Kompensationseinheit (4) zur Kompensation eines Mess- und/oder Verarbeitungsfehlers aus dem durch die Auswerteinheit (3) ausgewerteten, insbesondere digitalisierten Ausgabesignal (201, 202, 203) des Resolvers (2) unter Verwendung des, vorzugsweise in der Speichereinheit des Resolvers abgelegten, zumindest einen Kompensationsparameters (A₁ - Aₙ, Phi₁ - Phiₙ) die tatsächliche Drehzahl nᵢₛₜ und/oder den tatsächlichen Drehwinkel Phiᵢₛₜ berechnet.

6. Motor,
**dadurch gekennzeichnet,**
**dass** er einen Rotorlagegeber (1) nach einem der Ansprüche 1 - 4 umfasst.

7. Prüfplatz für einen Motor nach Anspruch 6, mit
• einem Prüfmittel (23), an dem der Motor (21) angeschlossen und mit dem der Motor (21) betreibbar ist, und
• einem Referenz-Erfassungsmittel (22), das an den Motor (21) angeschlossen ist, und mit dem ein Referenzsignal (220), welches von der Drehzahl und/oder dem Drehwinkel des Motors (21) abhängig ist, erfassbar ist,
wobei der Prüfplatz (20) eine Verarbeitungseinheit (24) umfasst, mit der der Mess- und/oder Verarbeitungsfehler eines Resolvers (2) eines Rotorlagegebers (1) des Motors (21) bestimmbar ist.

8. Prüfplatz nach Anspruch 7,
**dadurch gekennzeichnet,**
**dass** die Verarbeitungseinheit (24) zur Bestimmung eines Fehlersignals (400) eines Ausgabesignals (201, 202, 203) des Resolvers (2) zum Referenzsignal (220) vorgesehen ist, wobei das Fehlersignal insbesondere in Form von, vorzugsweise durch Fourier-Analyse eines Fehlersignals ermittelten, Kompensationsparameters (A₁ - Aₙ, Phi₁ - Phiₙ), ausgegeben und/-oder in einer Speichereinheit (10) des Rotorlagegeber (1) abgelegt werden kann.

9. Verfahren zur Ermittlung eines Fehlersignals (400) eines Ausgabesignals (201, 202, 203) eines Resolvers (2) mit einem Prüfplatz (20) nach einem der Ansprüche 5 - 6,
wobei
• ein Motor (21) an dem Prüfplatz (20) betrieben wird,
• mittels eines Referenz-Erfassungsmittels (22) ein Referenzsignal (220) erfasst wird,
• das Ausgabesignal (201, 202, 203) erfasst wird, und
• das Fehlersignal (400) des Ausgabesignals (201, 202, 203) von dem Referenzsignal (220) bestimmt wird.

10. Verfahren nach Anspruch 9,
**dadurch gekennzeichnet,**
**dass** aus dem Fehlersignal (400) zumindest ein Kompensationsparameter (A₁ - Aₙ, Phi₁ - Phiₙ) bestimmt wird, insbesondere mittels einer Fourier-Transformation des Fehlersignals (400).

11. Verfahren nach einem der Ansprüche 9 - 10,
**dadurch gekennzeichnet,**
**dass** das Ausgabesignal (201, 202, 203) für mehrere Drehzahlen und/oder Drehwinkel erfasst wird.

12. Verfahren nach einem der Ansprüche 9 - 11,
**dadurch gekennzeichnet,**
**dass** der Kompensationsparameter in einer Speichereinheit (10) des Rotorlagegebers (1) gespeichert wird.

13. Verfahren zur Bestimmung einer Drehzahl und/oder eines Drehwinkels eines Motors (21) mit einem Rotorlagegeber nach einem der Ansprüche 1 - 5,
**dadurch gekennzeichnet,**
**dass**
• der Motor (21) betrieben wird,
• wobei ein Ausgabesignal (201, 202, 203) eines Resolvers (2) eines Rotorlagegebers (1) des Motors (21) erfasst wird, und
• wobei eine Kompensation eines Mess- und/oder Verarbeitungsfehlers durch Überlagerung eines Fehlersignals (400) mit dem Ausgabesignal (201, 202, 203) des Resolvers (2) erfolgt.

14. Verfahren nach Anspruch 13,
**dadurch gekennzeichnet,**
**dass** aus dem Fehlersignal (400) zumindest ein Kompensationsparameter (A₁ - Aₙ, Phi₁ - Phiₙ) bestimmt wird, insbesondere mittels Fourier-Transformation.

15. Verfahren nach einem der Ansprüche 12 - 14,
**dadurch gekennzeichnet,**
**dass** der Mess- und/oder Verarbeitungsfehler Auswertfehler, Offset- und Amplitudenfehler in den Signalwegen, systematische Fehler des Resolvers, Verstärkungsfehler, Winkelfehler und/oder dergleichen umfasst.
